# EUROPEAN PATENT SPECIFICATION

(11) **EP 3 989 498 B1**
(45) Date of publication and mention of the grant of the patent: **03.01.2024**
(21) Application number: 20852721.8
(22) Date of filing: 05.08.2020
(51) Int. Cl.: H04L 69/22, H04L 49/90

(54) **METHOD AND NETWORK PROCESSOR FOR SENDING NETWORK MESSAGE**
VERFAHREN UND NETZWERKPROZESSOR ZUM SENDEN EINER NETZWERKNACHRICHT
PROCÉDÉ ET PROCESSEUR DE RÉSEAU POUR ENVOYER UN MESSAGE DE RÉSEAU

(30) Priority: 09.08.2019 CN 201910734622
(43) Date of publication of application: 27.04.2022
(73) Proprietor: ZTE Corporation, Shenzhen, Guangdong 518057 (CN)
(72) Inventor: LIN, Zhen, Shenzhen, Guangdong 518057 (CN); BAO, Xiaoyu, Shenzhen, Guangdong 518057 (CN); YU, Zhongyun, Shenzhen, Guangdong 518057 (CN)
(74) Representative: Novagraaf Technologies
(86) International application number: PCT/CN2020/107013
(87) International publication number: WO 2021/027645

(56) References cited:
- EP-A2- 1 091 523
- CN-A- 1 933 450
- CN-A- 101 841 476
- CN-A- 102 404 789
- CN-A- 103 179 085
- CN-A- 106 330 788
- CN-A- 108 809 854
- US-A1- 2002 073 216
- US-A1- 2014 047 188
- US-A1- 2014 047 188
- US-A1- 2015 098 469
- US-A1- 2017 339 259

## Description

### TECHNICAL FIELD

The present disclosure relates to, but is not limited to, a method and a device for sending a network packet, a network processor and a computer-readable storage medium.

### BACKGROUND

A media access control (MAC)/Internet protocol (IP)/ user datagram protocol (UDP) and other information of a packet are required to be configured for sending a network packet.

Methods for sending the network packet in the related technology occupy a large amount of CPU computation, which make a large CPU consumption and a low efficiency of sending the packet. US 2014/047188 A1 discloses a method and a multi-core communication processor for replacing data in system cache. US20020073216A1 discloses a method and apparatus for improving transmission performance by caching frequently-used packet headers. However, the above problem still remains not completely solved.

### SUMMARY

The following is a summary of the topics described in detail in the present disclosure. This summary is not intended to limit the scope of protection of the claims.

Some embodiments of the present disclosure provide a method for sending a network packet, according to independent claim 1. Further embodiments of the method are provided in dependent claims 2-7.

Some embodiments of the present disclosure further provide a network processor, which includes a memory, a processor and a computer program stored in the memory and capable of running on the processor, where in response to the processor executing the program, the above method for sending the network packet is implemented.

Some embodiments of the present disclosure further provide a computer-readable storage medium storing computer-executable instructions, and the computer-executable instructions are configured to execute the method for sending the network packet.

Other aspects will become apparent after reading and understanding the accompanying drawings and detailed description.

### BRIEF DESCRIPTION OF THE DRAWINGS

FIG. 1 is a schematic diagram of a mainstream device for sending a packet.
FIG. 2 is a flowchart of a method for sending a network packet according to an embodiment of the present disclosure.
FIG. 3 is a schematic diagram of a device for sending a packet according to an embodiment of the present disclosure.
FIG. 4 is a schematic diagram of illustrating a storage unit as an internal storage space according to an embodiment of the present disclosure.
FIG. 5 is a schematic diagram of illustrating a storage unit as a cache space according to an embodiment of the present disclosure.
FIG. 6 is a schematic diagram of illustrating a storage unit as an internal storage and a cache space according to an embodiment of the present disclosure.
FIG. 7 is a flowchart of a method for sending a network packet according to another embodiment of the present disclosure.
FIG. 8 is a flowchart of a first application example of the present disclosure.
FIG. 9 is a flowchart of a second application example of the present disclosure.
FIG. 10 is a schematic composition diagram of a device for sending a network packet according to an embodiment of the present disclosure.
FIG. 11 is a schematic composition diagram of a device for sending a network packet according to another embodiment of the present disclosure.
FIG. 12 is a schematic composition diagram of a network processor according to an embodiment of the present disclosure.

### DETAILED DESCRIPTION

The embodiments of the present disclosure may be described in detail below with reference to the accompanying drawings.

The operations shown in the flowcharts of the accompanying drawings may be executed in a computer system, including such as a set of computer-executable instructions. Although a logical order is shown in the flowcharts, in some cases, the operations shown or described may be executed in a different order.

In related technologies, information such as MAC/IP/UDP, data description information and payload data are all placed in an external storage space of a network accelerator. In response to sending a packet, a large amount of system bus traffic may be generated, where bus traffic other than the payload data may be considered as extra bus traffic. Especially in the large traffic scenarios where a payload length accounts for a small proportion of a total length of the packet (including header information) and reaches more than hundreds of GigaBit Per Second (Gbps), in response to sending the packet, a device frequently accesses the external storage space configuration and obtaining the MAC/IP/UDP information through a bus. This leads to a high bus traffic pressure and a low effective utilization rate of bus bandwidth.

In addition, the current method for sending a network packet is to construct information such as MAC/IP/UDP when sending, and then call a hardware interface to send the packet. Although this solution is flexible, during each packet sending, a central processing unit (CPU) is required to access the bus configuration and obtain the information such as MAC/IP/UDP, which occupies a lot of CPU computation. According to statistical data analysis, each assembly of information such as MAC/IP/UDP requires thousands or even thousands of cycles. Especially in the scenario with a large number of times for sending packets, there are some shortcomings, such as a large CPU consumption caused by assembling the information such as MAC/IP/UDP, and a low efficiency of sending packets by software.

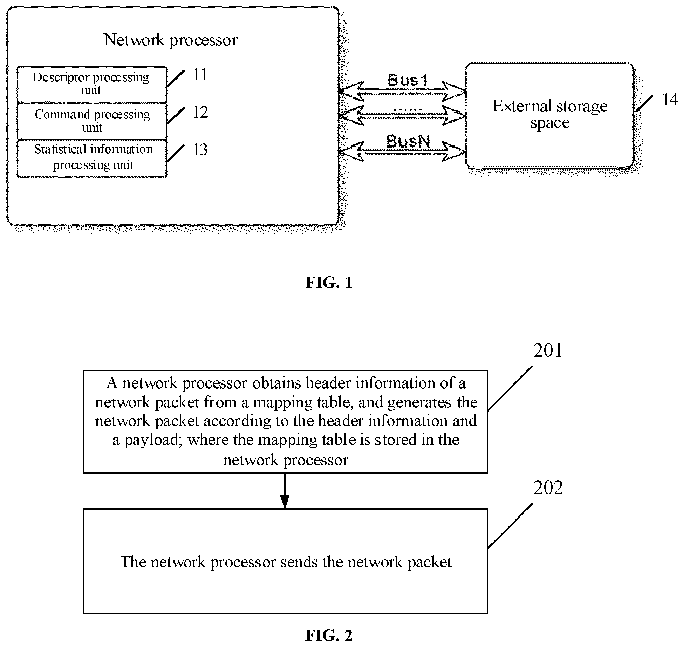

A method for sending packet in the related technology is shown in FIG. 1. A network processor includes a descriptor processing unit 11, a command processing unit 12 and a statistical information processing unit 13. The network processor interacts with an external storage space 14 through a bus to obtain the information such as MAC/IP/UDP, the data description information and the payload data. As mentioned above, there are some problems in this packet sending technology, such as the high bus traffic pressure, the low effective utilization rate of bus bandwidth, the large CPU consumption, and the low packet sending efficiency.

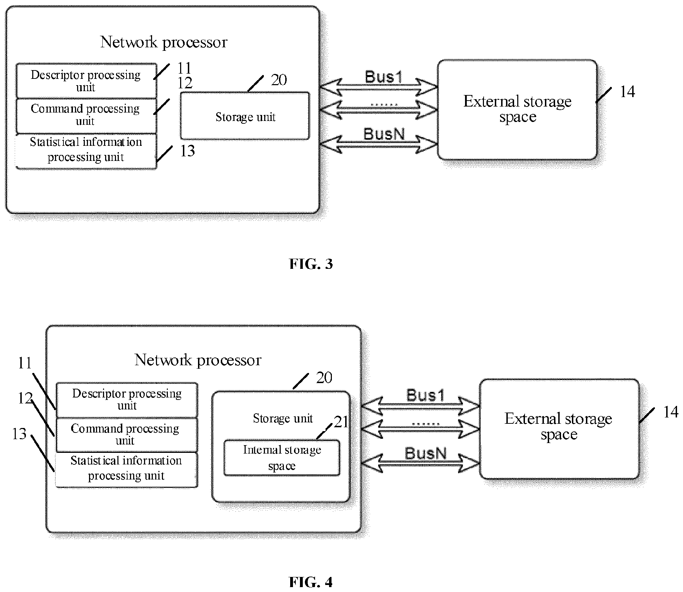

Referring to FIG. 2 and FIG. 3, some embodiments of the present disclosure provide a method for sending a network packet, which includes the following operations.

In operation 201, a network processor obtains header information of the network packet from a mapping table, and generates the network packet according to the header information and a payload; where the mapping table is stored in the network processor.

Herein, the header information may include, but is not limited to, one or more of MAC information, IP information, UDP information, GPRS tunnel protocol user plane (GTPU) information, and stream control transmission protocol (SCTP) information.

In an embodiment, the mapping table may include the header information, an index and a mapping relationship between the header information and the index. The network processor obtains corresponding header information from the mapping table in accordance with the mapping relationship according to the index.

Referring to FIG. 3, in the embodiment of the present disclosure, an internal storage unit 20 is newly added to the network processor, which may store the mapping table.

In an embodiment, the mapping table is stored in at least one of a memory and a cache of the network processor.

Referring to FIG. 4, the internal storage unit 20 in the network processor may include a memory (internal storage space 21). The internal storage space 21 includes but is not limited to a random access memory (RAM), a read only memory (ROM), and a RAM plus a ROM. The internal storage space 21 is configured to store pre-configured MAC/IP/UDP header information and a mapping of the index. A space size of the internal storage space 21 is adaptable to adapt to different application scenarios. During a packet sending process, the network processor may automatically match the corresponding MAC/IP/UDP information as long as the index used in the packet sending is obtained.

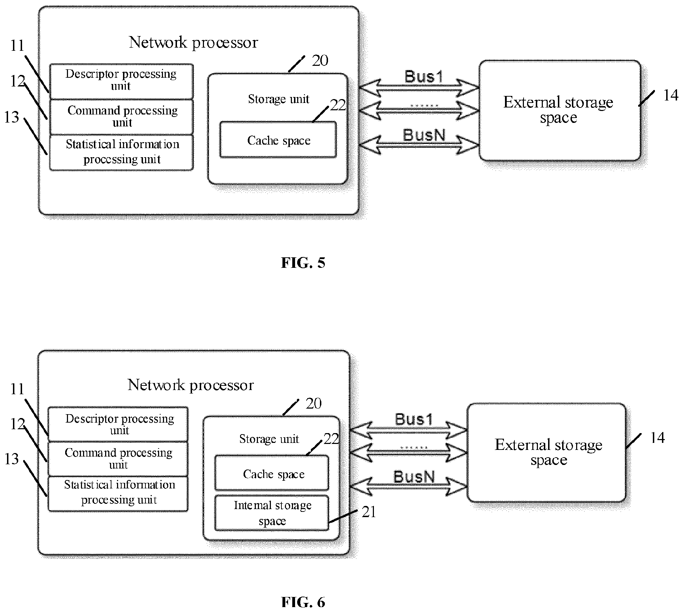

Referring to FIG. 5, the internal storage unit 20 in the network processor may include a cache (cache space 22). The network processor is configured to automatically and dynamically add the MAC/IP/UDP header information in the external storage space 14 to the cache space 22 of the network processor module when the MAC/IP/UDP header information in the external storage space 14 is used, and replace a specified entry according to a preset replacement rule, so as to improve the processing efficiency of the packet sending and reduce the bus traffic when the external storage space is used. The embodiments of the present disclosure do not limit the independent number, size, cache performance, enabling or not of the cache space.

Referring to FIG. 6, the internal storage unit may include the internal storage space (RAM, ROM, RAM+ROM) 21 and the cache space 22. The internal storage space 21 and the cache space 22 may configure an exemplary size of the space at an initialization stage according to requirements. The embodiments of the present disclosure do not limit the exemplary selection and size.

The internal storage unit 20 in the network processor may also include management logic of the internal storage space and the cache space, which is configured to maintain the mapping table between the header information and index, and to add, delete and update the index.

In an embodiment, before the operation 201, the method further includes the following operation.

The network processor generates the mapping table and stores the mapping table in the network processor.

That is, the mapping table is stored in the storage unit 20 in the network processor.

In an embodiment, the network processor generates the mapping table, which includes the following operation.

The network processor obtains the header information according to cell configuration information, and creates a mapping table with a mapping relationship between the header information and the index.

Herein, a MAC/IP of the corresponding source and destination is obtained through the cell configuration information. If the communication is encapsulated on the basis of a higher-layer protocol, such as UDP, GTPU, SCTP, etc., UDP, GTPU, SCTP information of the source and the destination are correspondingly added to form complete header information.

The mapping table with the mapping relationship between the header information and the index is created. In an example, the MAC/IP/UDP header information may only correspond to one index-mapping table. In an example, the MAC, the IP and the UDP may respectively correspond to one index-mapping table. In an example, the MAC/IP and the UDP may respectively correspond to one index-mapping table.

In an embodiment, the network processor generates the mapping table, which includes the following operation.

The network processor obtains the header information from the external storage space outside the network processor, and creates the mapping table with the mapping relationship between the header information and the index.

Herein, the network processor may first generate the header information in the external storage space outside the network processor, then store the header information in the cache in the network processor, create the mapping table with the mapping relationship between the header information and the index, and directly obtain the header information from the cache next time.

In operation 202, the network processor sends the network packet.

In this operation, the network processor sends an encapsulated network packet.

After the operation 202, the method may further include that the network processor performs statistical processing on information of the sent network packet, which may include the following operation.

The number of network packets sent this time, packet lengths, process number and physical port number, etc. used this time, are cumulatively counted.

In the embodiments of the present disclosure, the network processor internally stores the header information of the network packet, which reduces the bus traffic for accessing the external storage space in response to sending the network packet and saves the bus bandwidth. According to the embodiments of the present disclosure, the header information of the network packet is obtained through the mapping table, so that the cycle consumption of software is reduced, the encapsulation time of software and hardware is reduced, and the packet sending efficiency is improved. Moreover, storing the header information inside the network processor shortens the path of obtaining the header information, which is beneficial to improve the efficiency of network fault analysis. When embodiments of the present disclosure are implemented by software, the parameters of a software sending interface can be reduced and the program stability can be improved.

Referring to FIGs. 3 to 6, in the embodiments of the present disclosure, the internal storage space and/or the cache space and the related management logic (mapping information between information such as MAC/IP/UDP and the index, etc.) are newly added to the network processor.

Herein, the command processing unit 12 judges whether there is a new descriptor required to be sent in a command space. In response to there being the new descriptor required to be sent, the descriptor processing unit 11 is started for processing. The descriptor processing unit 11 resolves the descriptor, obtains information such as a payload address, a payload length, the MAC/IP/UDP, a packet pack and a sending mode, etc. according to the content of the descriptor, and assembles the packets to start the packet sending. The statistical information processing unit 13 is configured to performs statistical processing on the statistical information of the received and sent packets.

The external storage space 14 stores the MAC/IP/UDP header information and the payload required for the sending process. The embodiments of the present disclosure do not limit the use, type and size of the external storage space, which may be selected according to actual applications.

A bus connection structure is a physical connection between the network processor and the external storage space. The network processor may realize a read/write access to the external storage space through the bus. The embodiments of the present disclosure do not limit the type, width, and number of buses used in the bus connection structure, which may be selected according to actual applications.

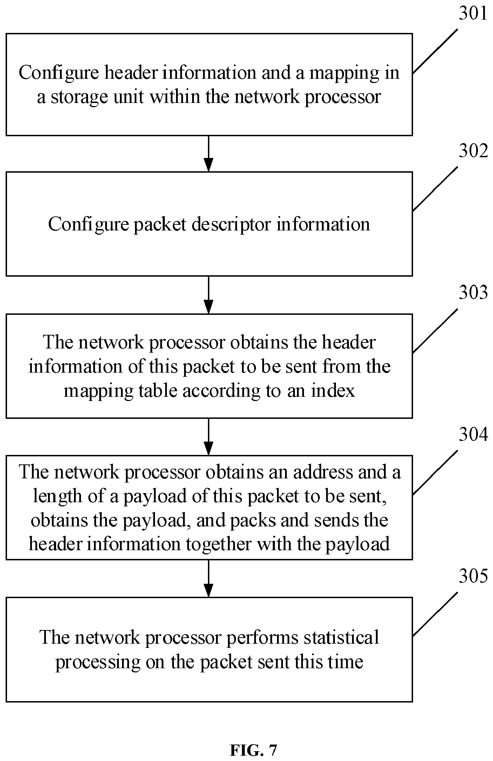

As shown in FIG. 7, in an embodiment, a method for constructing and sending a network packet is described, includes the following operations.

In operation 301, header information and a mapping table are configured in a storage unit in the network processor.

In this operation, software is initialized, and the header information such as MAC/IP/UDP and the mapping table are configured in the storage unit in the network processor.

The header information determines its content according to the protocol used, such as MAC header information: a receiver MAC address (6 bytes), a sender MAC address (6 bytes), an Ethernet type (two bytes), etc.

The embodiment of the present disclosure does not limit the types and combinations of the header information such as MAC/IP/UDP, and may be header information such as MAC, IP, UDP, GTPU and SCTP.

In operation 302, packet descriptor information is configured.

The packet descriptor information may include a payload source address of this packet to be sent, a payload length, an index of this packet to be sent, a command mode, etc. After the configuration is completed, the packet is started to be sent.

Herein, the index is transferred by a high layer that configures the header information such as MAC/IP/UDP and the mapping table of the index in an initialization stage.

In operation 303, the network processor obtains the header information of this packet to be sent from the mapping table according to the index.

This operation enters a network sending process. The network processor obtains the header information such as MAC/IP/UDP of this packet to be sent from the mapping table with the header information such as MAC/IP/UDP and the index configured in the operation 301 according to the index.

In operation 304, the network processor obtains an address and a length of a payload of this packet to be sent, obtains the payload, and packs and sends the header information together with the payload.

Herein, a descriptor processing unit in the network processor resolves the packet descriptor to obtain the payload address and length of this packet to be sent, and packs and sends the same with the header information such as MAC/IP/UDP.

In operation 305, the network processor performs statistical processing on the packets to be sent this time.

Herein, the number of packets to be sent this time, the length of the packets, the process number used in this sending process, the physical port number, etc. are cumulatively counted by a statistical information unit.

Some application examples are described below.

### First application example

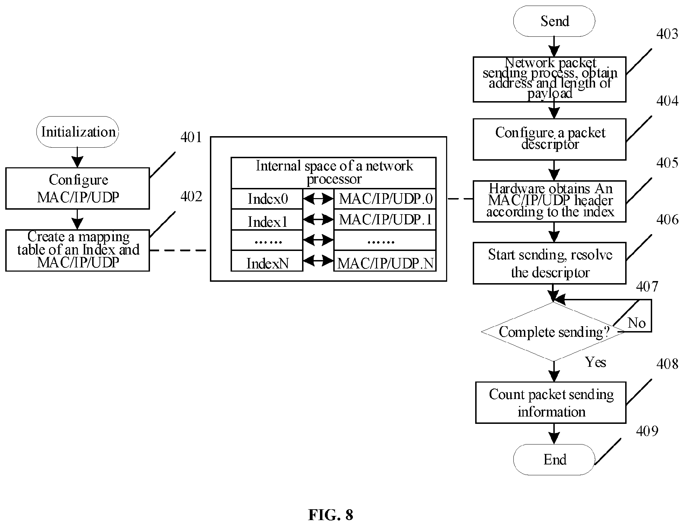

The device implementation solution involved in this application example is shown in FIG. 4, and the method implementation flow is shown in FIG. 8. The storage unit of the network processor in FIG. 4 uses the internal storage space. A mapping table of the MAC/IP/UDP header information and the index in the network processor is used in FIG. 8 to construct a network packet.

The operations of the first application example are as follows.

In operation 401, after the software is initialized, for example, after a communication base station establishes a cell, the MAC/IP of the destination terminal is obtained through the configuration information of the cell. In response to the communication being encapsulated on the basis of a higher-layer protocol, such as UDP, GTPU, SCTP, etc., the UDP, GTPU, SCTP information of the source and the destination are correspondingly added to form the complete header information. To simplify the description, the complete header information described in this application example is MAC/IP/UDP header information. The implementation of the embodiments of the present disclosure includes, but is not limited to, the scenario where the header information described in the first application example only contains MAC/IP/UDP.

In operation 402, the complete header information MAC/IP/UDP headers described in the operation 401 are respectively configured into the storage unit 20 of the network processing module in FIG. 4, and the mapping table of the MAC/IP/UDP header information and the index is created. The created relationship may be that the MAC/IP/UDP header information only corresponds to one index mapping table, or MAC, IP and UDP respectively correspond to one index mapping table, or MAC/IP and UDP herein respectively correspond to one index mapping table. The mapping table of the header information and the index described in the embodiments of the present disclosure includes, but is not limited to, the index mapping table created by the combination of headers described above, and the mapping table of combination of any types of headers may be created according to the requirements of the application occasions.

In operation 403, the network sending process is entered. The software completes the processing of sending the payload. A source address and a payload length of payload data stored in the external storage space described in FIG. 4 are obtained.

In operation 404, the software configures the packet descriptor information, including the source address and the payload length of the payload data of this packet sending, the index of this packet sending, the command processing mode, etc.

In operation 405, the storage unit 20 in the network processor described in FIG. 4 obtains the MAC/IP/UDP header information of this packet sending from the mapping table of the MAC/IP/UDP header information and the index configured in the operation 402 according to the index.

In operation 406, a sending command is started, and the descriptor is resolved by the descriptor processing unit, and the packing and sending are completed. The method for sending commands may be that there is only one command, that is, there is only one packet descriptor for this packet sending, or multiple commands may be included, that is, this packet sending completes the packet sending process according to the configured information of multiple packet descriptors in turn.

In operation 407, it is judged whether the packet sending is completed. In response to the packet sending not being completed, the sending is continued. In response to the packet sending being completed, the next operation is executed.

In operation 408, the statistical information processing unit of the network processor cumulatively counts the number of packets sent this time, the length of the packets, the process number used in this sending, the physical port number, etc. during the sending.

In operation 409, wait for the statistical information update to be completed, and end the packet sending process.

### Second application example

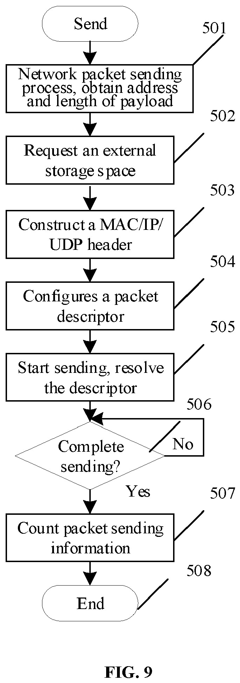

The specific exemplary object of the storage unit in the network processor in the first application example is replaced by the cache space in the internal storage space, which constitutes the device implementation solution of the present application example as shown in FIG. 5. The method used in the present application example is shown in FIG. 9. Although FIG. 9 is a packet sending process, in the present application example, the MAC/IP/UDP header information stored in the external storage space obtained for the first time is added to the cache space.

The operations of the second application example are as follows.

In operation 501, the network sending process is entered. The software completes the processing of sending the payload. A source address and a payload length of payload data stored in the external storage space described in FIG. 5 are obtained.

In operation 502, the external storage space is requested, which is configured to store the MAC/IP/UDP header information required for the sending. The embodiments of the present disclosure do not limit the type and size of the external storage space described, which may be selected according to actual application occasions.

In operation 503, the MAC/IP/UDP header information sent this time is constructed and stored in the external storage space. The MAC/IP/UDP header information may be constructed by software or hardware. The embodiments of the present disclosure do not limit the construction mode of the MAC/IP/UDP header information.

In operation 504, the software configures the packet descriptor information, including the payload source address and the payload length of the payload data in this packet sending, the command processing mode, etc.

Operations 505 to 508 are the same as operations 406 to 409 of the first application example.

The MAC/IP/UDP header information used from the external storage space for the first time is stored in the cache space of the network processor after this sending. Within the storage capacity of the cache space, in response to the MAC/IP/UDP header information not being set as invalid, and then in response to the MAC/IP/UDP header information being used next time, it is preferred to find a match in the cache. The cache may set an enable bit.

### Third application example

In a case of there being too many combinations of the MAC/IP/UDP header information and being limited by a size of the storage unit of the network processor, the first application example and the second application example may be implemented in combination. The efficiency of sending packets is also improved appropriately while maintaining flexibility.

The operations of the third application example are similar to the operations 405 to 409 of the first application example. The difference is that when there are too many MAC/IP/UDP header information entries actually used, and the internal storage space of the storage unit in the network processor is limited, a manner of the internal storage space plus the cache space is required to be used. In an initialization stage, a software is required to plan the MAC/IP/UDP header information entries stored in the internal storage space and the external storage space respectively according to the frequency of the header information entries and traffic solution requirements in the actual scenarios. When the header information used in the packet sending is stored in the internal storage space, the packet sending process is basically the same as the packet sending process of the first application example. When the header information used in the packet sending is stored in the external storage space, the packet sending process is basically the same as the packet sending process of the second application example. In essence, the third application instance is a combination of the first application example and the second application example.

To sum up, the technical solutions provided by the embodiments of the present disclosure are simple and flexible to implement, and technicians can choose the manner of use according to the actual application scenarios. On the basis of maintaining the flexibility of conventional packet sending and packing, the embodiments of the present disclosure add a novel method of using the mapping table of the MAC/IP/UDP header information and the index in the network processor. The method can effectively solve the bandwidth bottleneck of accessing the external storage space and improve the efficiency of the packet sending.

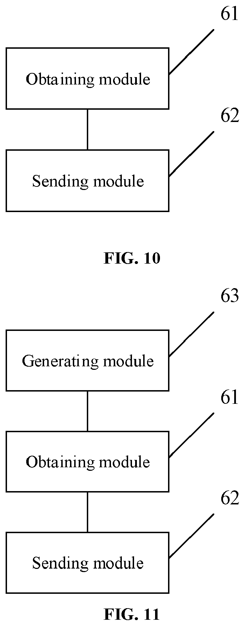

As shown in FIG. 10, some embodiments of the present disclosure further provide a device for sending a network packet, which includes an obtaining module 61 and a sending module 62. The obtaining module 61 is configured to obtain header information of a network packet from a mapping table, and to generate the network packet according to the header information and a payload. The mapping table is stored in the network processor. The sending module 62 is configured to send the network packet.

In an embodiment, the mapping table includes the header information, an index and a mapping relationship between the header information and the index. The obtaining module 61 is configured to obtain the corresponding header information from the mapping table in accordance with the mapping relationship according to the index.

As shown in FIG. 11, in an embodiment, the device further includes a generating module 63, configured to generate the mapping table and store the mapping table in the network processor.

In an embodiment, the generating module 63 is configured to obtain the header information according to configuration information of a cell, and to create a mapping table with a mapping relationship between the header information and an index.

In an embodiment, the generating module 63 is configured to obtain the header information from a storage space outside the network processor, and create the mapping table with the mapping relationship between the header information and the index.

In an embodiment, the mapping table is stored in at least one of a memory and a cache of the network processor.

In an embodiment, the header information includes at least one of MAC information, IP information, UDP information, GTPU information and SCTP information.

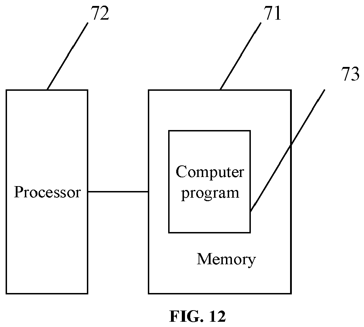

As shown in FIG. 12, some embodiments of the present disclosure further provide a network processor, which includes a memory 71, a processor 72, and a computer program 73 stored in the memory 71 and capable of running on the processor 72. When the processor 72 executing the program, the method for sending the network packet is implemented.

Some embodiments of the present disclosure further provide a computer-readable storage medium storing computer-executable instructions, and the computer-executable instructions are configured to execute the method for sending the network packet.

In this embodiment, the above storage medium may include, but is not limited to, a U disk, a read-only memory (ROM), a random access memory (RAM), a mobile hard disk, a magnetic disk or an optical disk and other medium that may store program codes.

Those having ordinary skill in the art shall understand that all or some of the operations in the method disclosed above and the functional modules/units in the system and the apparatus can be implemented as software, firmware, hardware and an appropriate combination thereof. In the hardware implementation, division between functional modules/units mentioned in the above description does not necessarily correspond to division of physical components. For example, one physical component may have multiple functions, or one function or operation may be implemented by several physical components. Some physical components or all physical components may be implemented as software executed by a processor, such as a central processing unit, a digital signal processor, or a microprocessor, or may be implemented as hardware, or may be implemented as an integrated circuit, for example, an application specific integrated circuit. Such software can be distributed on a computer-readable medium, which can include a computer storage medium (or non-transitory medium) and a communication medium (or transitory medium). As well known to those having ordinary skill in the art, the term computer storage medium includes a volatile or non-volatile, removable or irremovable medium implemented in any method or technology applied to storage information (such as a computer-readable instruction, a data structure, a computer program module or other data). The computer storage medium includes, but is not limited to, a random access memory (RAM), a read-only memory (ROM), an electrically erasable programmable read only memory (EEPROM), a flash memory or other memory technology, a compact disc read-only memory (CD-ROM), a digital versatile disc (DVD) or another optical disc memory, a magnetic box, a magnetic tape, a magnetic disc or another magnetic storage apparatus, or any other medium applicable to storing desired information and accessible by a computer. In addition, as is well known to those having ordinary skill in the art, the communication medium usually includes computer-readable instructions, data structures, program modules, or other data in a modulated data signal such as a carrier wave or other transmission mechanisms, and may include any information delivery medium.

## Claims

1. A method for sending a network packet, applied in a device comprising a network processor and an external storage space with which the network processor interacts through a bus, the method comprising:
planning, in an initialization stage, header information stored in a memory of the network processor and header information stored in the external storage space respectively according to a frequency of the header information and traffic solution requirements in actual scenarios;
in a case where the header information of the network packet is stored in the memory of the network processor, obtaining (201), by the network processor, the header information of the network packet from a mapping table stored in the memory of the network processor; and in a case where the header information of the network packet is stored in the external storage space, obtaining, by the network processor, the header information of the network packet from the external storage space, and storing the header information in a mapping table in a cache of the network processor;
generating the network packet according to the header information and a payload; and
sending (202), by the network processor, the network packet.

2. The method according to claim 1, wherein the mapping table comprises the header information, an index and a mapping relationship between the header information and the index;
the network processor obtaining the header information of the network packet from the mapping table comprises:
obtaining, by the network processor, the corresponding header information from the mapping table in accordance with the mapping relationship according to the index.

3. The method according to claim 1, wherein before the network processor obtains the header information of the network packet from the mapping table, the method further comprises:
generating, by the network processor, the mapping table and storing the mapping table in the memory of the network processor.

4. The method according to claim 3, wherein the network processor generating the mapping table comprises:
obtaining, by the network processor, the header information according to configuration information of a cell established by a communication base station, and creating a mapping table with a mapping relationship between the header information and an index.

5. The method according to claim 3, wherein the network processor generating the mapping table comprises:
obtaining, by the network processor, the header information from the external storage space, and creating a mapping table with a mapping relationship between the header information and an index.

6. The method according to claim 1, wherein, storing the header information in the mapping table in the cache of the network processor comprises:
storing the header information in the cache in the network processor;
creating the mapping table with a mapping relationship between the header information and an index, such that the header information is capable to be obtained from the cache next time.

7. The method according to any one of claims 1 to 6, wherein: the header information comprises at least one of media access control information, Internet protocol information, user datagram protocol information, general packet radio service tunnel protocol-user plane information, and stream control transmission protocol information.

8. A network processor, comprising: a memory (71), a processor (72) and a computer program (73) stored in the memory (71) and capable of running on the processor (72), wherein in response to the processor (72) executing the program, the method for sending the network packet according to any one of claims 1 to 7 is implemented.

9. A computer-readable storage medium storing computer-executable instructions configured to execute the method for sending the network packet according to any one of claims 1-7.

## Patentansprüche

1. Verfahren zum Senden eines Netzwerkpakets, das in einer Vorrichtung angewendet wird, umfassend einen Netzwerkprozessor und einen externen Speicherplatz, mit dem der Netzwerkprozessor durch einen Bus interagiert, das Verfahren umfassend:
Planen, in einer Initialisierungsstufe, von Kopfinformationen, die jeweils in einem Speicher des Netzwerkprozessors gespeichert sind, und von Kopfinformationen, die in dem externen Speicherplatz gespeichert sind, gemäß einer Frequenz der Kopfinformationen und der Verkehrslösungsanforderungen in tatsächlichen Szenarien;
in einem Fall, in dem die Kopfinformationen des Netzwerkpakets in dem Speicher des Netzwerkprozessors gespeichert sind, Erhalten (201), durch den Netzwerkprozessor, der Kopfinformationen des Netzwerkpakets aus einer Mapping-Tabelle, die in dem Speicher des Netzwerkprozessors gespeichert ist; und in einem Fall, in dem die Kopfinformationen des Netzwerkpakets in dem externen Speicherplatz gespeichert sind, Erhalten, durch den Netzwerkprozessor, der Kopfinformationen des Netzwerkpakets aus dem externen Speicherplatz und Speichern der Kopfinformationen in einer Mapping-Tabelle in einem Cache des Netzwerkprozessors;
Erzeugen des Netzwerkpakets gemäß den Kopfinformationen und einer Nutzinformation; und Senden (202), durch den Netzwerkprozessor, des Netzwerkpakets.

2. Verfahren nach Anspruch 1, wobei die Mapping-Tabelle die Kopfinformationen, einen Index und eine Mapping-Beziehung zwischen den Kopfinformationen und dem Index umfasst;
wobei das Erhalten des Netzwerkprozessors der Kopfinformationen des Netzwerkpakets aus der Mapping-Tabelle umfasst:
Erhalten, durch den Netzwerkprozessor, der entsprechenden Kopfinformationen aus der Mapping-Tabelle gemäß der Mapping-Beziehung gemäß dem Index.

3. Verfahren nach Anspruch 1, wobei, bevor der Netzwerkprozessor die Kopfinformationen des Netzwerkpakets aus der Mapping-Tabelle erhält, das Verfahren ferner umfasst:
Erzeugen, durch den Netzwerkprozessor, der Mapping-Tabelle und Speichern der Mapping-Tabelle in dem Speicher des Netzwerkprozessors.

4. Verfahren nach Anspruch 3, wobei das Erzeugen des Netzwerkprozessors der Mapping-Tabelle umfasst:
Erhalten, durch den Netzwerkprozessor, der Kopfinformationen gemäß Konfigurationsinformationen einer Zelle, die durch eine Kommunikationsbasisstation eingerichtet wird, und Erstellen einer Mapping-Tabelle mit einer Mapping-Beziehung zwischen den Kopfinformationen und einem Index.

5. Verfahren nach Anspruch 3, wobei das Erzeugen des Netzwerkprozessors der Mapping-Tabelle umfasst:
Erhalten, durch den Netzwerkprozessor, der Kopfinformationen aus dem externen Speicherplatz und Erstellen einer Mapping-Tabelle mit einer Mapping-Beziehung zwischen den Kopfinformationen und einem Index.

6. Verfahren nach Anspruch 1, wobei das Speichern der Kopfinformationen in der Mapping-Tabelle in dem Cache des Netzwerkprozessors umfasst:
Speichern der Kopfinformationen in dem Cache in dem Netzwerkprozessor;
Erstellen der Mapping-Tabelle mit einer Mapping-Beziehung zwischen den Kopfinformationen und einem Index, derart, dass die Kopfinformationen nächstes Mal aus dem Cache erhalten werden können.

7. Verfahren nach einem der Ansprüche 1 bis 6, wobei: die Kopfinformationen mindestens eines von Informationen hinsichtlich Media Access Control, Informationen hinsichtlich Internet Protocol, Informationen hinsichtlich User Datagram Protocol, Informationen hinsichtlich General Packet Radio Service Tunnel Protocol-User Plane und Informationen hinsichtlich Stream Control Transmission Protocol umfassen.

8. Netzwerkprozessor, umfassend: einen Speicher (71), einen Prozessor (72) und ein Computerprogramm (73), das in dem Speicher (71) gespeichert und in der Lage ist, auf dem Prozessor (72) abzulaufen, wobei als Reaktion darauf, dass der Prozessor (72) das Programm ausführt, das Verfahren zum Senden des Netzwerkpakets nach einem der Ansprüche 1 bis 7 implementiert wird.

9. Computerlesbares Speichermedium, das computerausführbare Anweisungen speichert, die konfiguriert sind, um das Verfahren zum Senden des Netzwerkpakets nach einem der Ansprüche 1 bis 7 auszuführen.

## Revendications

1. Procédé permettant d'envoyer un paquet réseau, appliqué dans un dispositif comprenant un processeur de réseau et un espace de stockage externe avec lequel le processeur de réseau interagit par l'intermédiaire d'un bus, le procédé comprenant :
la planification, dans une phase d'initialisation, d'informations d'en-tête stockées dans une mémoire du processeur de réseau et d'informations d'en-tête stockées dans l'espace de stockage externe respectivement selon une fréquence des informations d'en-tête et des exigences de solution de trafic dans des scénarios réels ;
dans un cas où les informations d'en-tête du paquet réseau sont stockées dans la mémoire du processeur de réseau, l'obtention (201), par le processeur de réseau, des informations d'en-tête du paquet réseau à partir d'une table de mappage stockée dans la mémoire du processeur de réseau ; et dans un cas où les informations d'en-tête du paquet réseau sont stockées dans l'espace de stockage externe, l'obtention, par le processeur de réseau, des informations d'entête du paquet réseau à partir de l'espace de stockage externe, et le stockage des informations d'en-tête dans une table de mappage dans un cache du processeur de réseau ;
la génération du paquet réseau selon les informations d'en-tête et des données utiles ; et l'envoi (202), par le processeur de réseau, du paquet réseau.

2. Procédé selon la revendication 1, dans lequel la table de mappage comprend les informations d'en-tête, un index et une relation de mappage entre les informations d'en-tête et l'index ;
l'obtention par le processeur de réseau des informations d'en-tête du paquet réseau à partir de la table de mappage comprend :
l'obtention, par le processeur de réseau, des informations d'en-tête correspondantes à partir de la table de mappage conformément à la relation de mappage selon l'index.

3. Procédé selon la revendication 1, avant que le processeur de réseau n'obtienne les informations d'en-tête du paquet réseau à partir de la table de mappage, le procédé comprenant en outre :
la génération, par le processeur de réseau, de la table de mappage et le stockage de la table de mappage dans la mémoire du processeur de réseau.

4. Procédé selon la revendication 3, dans lequel la génération par le processeur de réseau de la table de mappage comprend :
l'obtention, par le processeur de réseau, des informations d'en-tête selon des informations de configuration d'une cellule établie par une station de base de communication, et la création d'une table de mappage avec une relation de mappage entre les informations d'en-tête et un index.

5. Procédé selon la revendication 3, dans lequel la génération par le processeur de réseau de la table de mappage comprend :
l'obtention, par le processeur de réseau, des informations d'en-tête à partir de l'espace de stockage externe, et la création d'une table de mappage avec une relation de mappage entre les informations d'en-tête et un index.

6. Procédé selon la revendication 1, dans lequel, le stockage des informations d'en-tête dans la table de mappage dans le cache du processeur de réseau comprend :
le stockage des informations d'en-tête dans le cache dans le processeur de réseau ;
la création de la table de mappage avec une relation de mappage entre les informations d'en-tête et un index, de sorte que les informations d'en-tête peuvent être obtenues à partir du cache la fois suivante.

7. Procédé selon l'une quelconque des revendications 1 à 6, dans lequel : les informations d'en-tête comprennent au moins l'une parmi des informations de commande d'accès au support, des informations de protocole Internet, des informations de protocole de datagramme utilisateur, des informations de protocole de tunnel de service général de paquets radio-plan utilisateur, et des informations de protocole de transmission de commande de flux.

8. Processeur de réseau, comprenant : une mémoire (71), un processeur (72) et un programme d'ordinateur (73) stocké dans la mémoire (71) et pouvant tourner sur le processeur (72), dans lequel en réponse au processeur (72) exécutant le programme, le procédé permettant d'envoyer le paquet réseau selon l'une quelconque des revendications 1 à 7 est implémenté.

9. Support de stockage lisible par ordinateur stockant des instructions exécutables par ordinateur configurées pour exécuter le procédé permettant d'envoyer le paquet réseau selon l'une quelconque des revendications 1 à 7.
